# EUROPEAN PATENT APPLICATION

(11) **EP 4 660 055 A1**
(43) Date of publication of application: **10.12.2025**
(21) Application number: 25178691.9
(22) Date of filing: 26.05.2025
(51) Int. Cl.: B62D 21/15, B62D 25/02, B62D 25/20

(54) **LOWER STRUCTURE OF VEHICLE**

(30) Priority: 07.06.2024 JP 2024093032
(71) Applicant: MAZDA MOTOR CORPORATION, Hiroshima 730-8670 (JP)
(72) Inventor: Kamemoto, Eiji, Aki-gun, Hiroshima, 730-8670 (JP); Tsukamoto, Hideyuki, Aki-gun, Hiroshima, 730-8670 (JP); Natsume, Hirotaka, Aki-gun, Hiroshima, 730-8670 (JP); Kamei, Takehiro, Aki-gun, Hiroshima, 730-8670 (JP)
(74) Representative: Lorenz Seidler Gossel Part. mbB

(57) **Abstract**

A pair of right-and-left side sills extending in a vehicle longitudinal direction and having a closed-cross section, a cross member extending in a vehicle width direction between the side sills, and a reinforcement extending in the vehicle longitudinal direction inside the closed-cross section of each of the pair of side sills are provided. The reinforcement includes a pair of upper-and-lower lateral wall portions expanding in the vehicle longitudinal direction and in a vehicle width direction and a pair of right-and-left vertical wall portions connecting, in a vertical direction, respective right-side end portions of the pair of lateral wall portions and respective left-side end portions of the pair of lateral wall portions, and the lateral wall portions have plural first ridgeline portions extending in the vehicle width direction, respectively.

## Description

### BACKGROUND OF THE INVENTION

The present invention relates to a lower structure of a vehicle.

It has been considered to arrange a reinforcing member inside a side sill as countermeasures for a pole side-collision of a vehicle.

Japanese Patent Laid-Open Publication No. 2021-024350, for example, discloses a vehicle-body structure in which a reinforcing member having a continuous-cylindrical structure in which plural polygonal-shaped closed-cross sections are continuous when viewed in a vehicle width direction and a deformation-control member to control deformation, in a vehicle longitudinal direction, of the continuous-cylindrical structure of the reinforcing member are arranged inside a side sill extending in a vehicle longitudinal direction.

In the vehicle-body structure of the above-described patent document, the load (load-bearing) capacity along the vehicle width direction is improved by the cylindrical structure of the reinforcement. However, if a whole part of the reinforcement is constituted by the cylindrical structure, a gross area of the reinforcement becomes too large, and therefore the vehicle-body weight may increase improperly.

### SUMMARY OF THE INVENTION

The present invention has been devised in view of the above-described matter and an object of the present invention is to provide a lower structure of a vehicle which can properly improve the absorption amount of a collision load in the vehicle side collision, suppressing an increase of the vehicle-body weight.

The present invention is a lower structure of a vehicle, comprising a pair of right-and-left side sills extending in a vehicle longitudinal direction and having a closed-cross section, a cross member extending in a vehicle width direction between the pair of side sills, and a reinforcement extending in the vehicle longitudinal direction inside the closed-cross section of each of the pair of side sills and reinforcing the side sill, wherein the reinforcement includes a pair of upper-and-lower lateral wall portions expanding in the vehicle longitudinal direction and in a vehicle width direction and a pair of right-and-left vertical wall portions connecting, in a vertical direction, respective right-side end portions, in the vehicle width direction, of the pair of lateral wall portions and respective left-side end portions, in the vehicle width direction, of the pair of lateral wall portions, and at least one of the pair of lateral wall portions has plural first ridgeline portions which extend in the vehicle width direction and are aligned in the vehicle longitudinal direction, respectively. The term aligned means that at least some of the ridgeline portions are oriented in the same direction, i.e. extend in the same direction. Specifically, all ridgeline portions are oriented in the same direction.

According to the present invention, part of the collision load can be absorbed by compressive deformation of the first ridgeline portions in the vehicle wide collision. Further, since the pair of lateral wall portions are connected by the pair of vertical wall portions, the bending deformation of the lateral wall portion caused by the collision load can be suppressed. Thereby, part of the collision load can be transmitted to the cross member. Accordingly, the absorption amount of the collision load can be improved.

Further, since the reinforcement is constituted by the lateral wall portions and the vertical wall portions, the weight increase can be suppressed properly compared to a case where a cylindrical structure extending in the vehicle width direction is applied. The first ridgeline portions do not affect the weight increase of the reinforcement. Accordingly, the lower structure of the present invention can properly improve the absorption amount of the collision load in the vehicle side collision, suppressing the increase of the vehicle-body weight.

In an embodiment of the present invention, the lateral wall portion comprises a first flat-face portion located at a relatively upper side, a second flat-face portion located at a relatively lower side, and a connection portion connecting the first flat-face portion and the second flat-face portion in the vertical direction, and the first ridgeline portions are positioned between the first flat-face portion and the connection portion and between the second flat-face portion and the connection portion, respectively. Therefore, the lateral wall portion has an uneven shape, in particular the lateral wall portion has a concave-and-convex shape when viewed in the lateral direction of the vehicle.

According to this embodiment, since the lateral wall portion is comprised of the plural flat faces, the bending deformation can be suppressed. Thereby, the collision load can be transmitted to the cross member properly. Accordingly, the lower structure can improve the absorption amount of the collision load in the vehicle side collision.

In another embodiment of the present invention, the cross member is comprised of plural cross members which are provided to be separated from each other in the vehicle longitudinal direction, and the reinforcement is arranged at a portion inside the side sill which includes an area where the plural cross members are provided.

According to this embodiment, even if the vehicle side collision occurs at a point, in the vehicle longitudinal direction, where the cross members do not exist, the collision load can be transmitted to the cross member via the lateral wall portions. Accordingly, the lower structure can improve the absorption amount of the collision load in the vehicle side collision.

In another embodiment of the present invention, both of the pair of lateral wall portions have the plural first ridgeline portions, respectively.

According to this embodiment, the collision load can be received at the upper-side lateral wall portion and the lower-side lateral wall portion dispersedly. Even if the first ridgeline portions are provided at both the upper-side lateral wall portion and the lower-side lateral wall portion, the weight increase of the reinforcement as a whole is small. Accordingly, the absorption amount of the collision load in the vehicle side collision can be improved, suppressing the increase of the vehicle-body weight.

In another embodiment of the present invention, the plural first ridgeline portions provided at the pair of lateral wall portions are located the same positions in the vehicle longitudinal direction.

According to this embodiment, the collision load can be dispersed to the upper-side lateral wall portion and the lower-side lateral wall portion equally. The lower structure can improve the absorption amount of the collision load in the vehicle side collision.

In another embodiment of the present invention, the cross member includes a ridgeline portion extending in the vehicle width direction, the reinforcement is provided at the same position, in the vehicle longitudinal direction, as the cross member, and part of the plural first ridgeline portions of the lateral wall portion is located at the same level, in the vertical direction, as the ridgeline of the cross member. As an alternative or in addition, the part of the plural first ridgeline portions of the lateral wall portion is located at the same position, in the longitudinal direction, as the ridgeline of the cross member.

According to this embodiment, the transmission efficiency of the collision load from the side sill to the cross member is improved. The lower structure can improve the absorption amount of the collision load in the vehicle side collision.

Further, said cross member may have a cross-member body, in particular with a cross section with a M-letter shape. The cross-member body may comprise a plurality of upper face portions and side face portions, and a joint face portion to be joined to a floor panel of the vehicle, the cross-member ridgeline portion extending in the lateral direction being formed between an upper face portion and a side face portion and/or between the joint face portion and a side face portion

In another embodiment of the present invention, the pair of lateral wall portions and the pair of vertical wall portions are integrated.

According to this embodiment, the bending deformation of the lateral wall portion can be suppressed easily. Thereby, the lateral wall portion can easily transmit the collision load to the cross member in the vehicle width direction. Consequently, the lower structure can improve the absorption amount of the collision load in the vehicle side collision.

In another embodiment of the present invention, the lateral wall portion has a flange extending in the vertical direction, and the flange is fixed to the side sill.

According to this embodiment, the bending deformation of the lateral wall portion can be suppressed easily. Thereby, the lateral wall portion can easily transmit the collision load to the cross member in the vehicle width direction. Consequently, the lower structure can improve the absorption amount of the collision load in the vehicle side collision.

In another embodiment of the present invention, the lateral wall portion has a second ridgeline portion which extends in the vehicle longitudinal direction at a middle position, in the vehicle width direction, thereof.

According to this embodiment, the bending deformation of the lateral wall portion can be suppressed easily. Thereby, the lateral wall portion can easily transmit the collision load to the cross member in the vehicle width direction. Consequently, the lower structure can improve the absorption amount of the collision load in the vehicle side collision.

In another embodiment the ridgeline portions may be formed by a bending process applied to the lateral wall portions. Further, the material strength of the reinforcement is lower than that of the cross-member. Herein, the material strength means the strength of a plate itself which constitutes the member. The material strength is a parameter to be determined by the tensional strength and the thickness of the plate, for example. The higher the tensional strength is, the higher the material strength is. Also, the larger the thickness is, the higher the material strength is. Therefore, the materials used for forming the reinforcement have a lower material strength than the materials used for the cross-member.

In another embodiment part of the ridgeline portions of the side lateral wall portion is located at the same level, in the vertical direction, as a floor panel (3) mountable to the vehicle (1).

In another embodiment, the cross member includes a cross-member body and brackets, the brackets may be fixed to both sides, in the lateral direction, of the cross-member body, a left-side bracket, in the longitudinal direction of the vehicle, may be fixed to the left-side side sill by welding, and a right-side bracket, in the longitudinal direction of the vehicle, may be fixed to the right-side side sill by welding

Another aspect of the invention is directed to a vehicle including a lower structure according to the invention.

As described above, the lower structure of the vehicle according to the present invention can properly improve the absorption amount of the collision load in the vehicle side collision, suppressing the increase of the vehicle-body weight.

The present invention will become apparent from the following description which refers to the accompanying drawings.

### BRIEF DESCRIPTION OF THE DRAWINGS

FIG. **1** is a plan view showing a vehicle body of a vehicle equipped with a lower structure according to an exemplified first embodiment.
FIG. **2** is a perspective view of a right-side side sill, when viewed from an upper right-rear side.
FIG. **3** is a sectional view taken along lone III-III of FIG. **2****.**
FIG. **4** is a sectional view taken along lone IV-IV of FIG. **2****.**
FIG. **5** is a perspective view of a reinforcement.
FIG. **6** is a sectional view taken along lone VI-VI of FIG. **3** in a state where the side sill is omitted.
FIG. **7** is a schematic diagram showing a deformation state of the reinforcement in a vehicle side collision.
FIG. **8** is a perspective view of a reinforcement of a lower structure according to a second embodiment.
FIG. **9** is a sectional view showing a fixation structure of the reinforcement and the side sill according to the second embodiment.
FIG. **10** is a perspective view of a reinforcement of a lower structure according to a third embodiment.
FIG. **11** is a perspective view of a reinforcement of a lower structure according to a fourth embodiment.

### DETAILED DESCRIPTION OF THE INVENTION

Hereafter, exemplified embodiments of the present invention will be described specifically referring to the drawings. In the following description, respective positions (directions) of front, rear, left, right, upper and lower relative to a vehicle **1** will be merely referred to as the "front," "rear," "left," "right," "upper" and "lower." A lateral direction corresponds to a vehicle width direction.

### < First Embodiment >

### (1) Whole Structure of Lower Portion of Vehicle

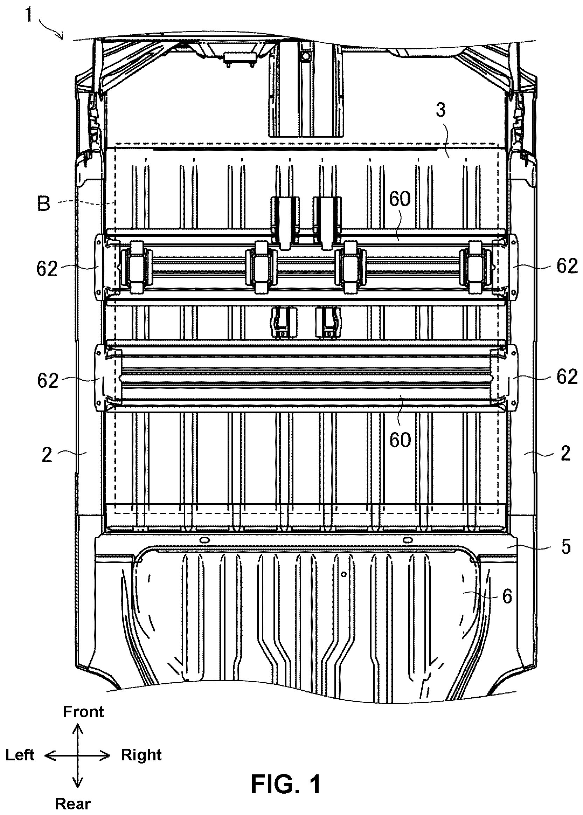

FIG. 1 shows a lower vehicle body of the vehicle **1** provided with a lower structure according to the present embodiment. The vehicle **1** is a four-door type passenger vehicle. In the present embodiment, the vehicle **1** has a laterally-symmetrical vehicle-body structure.

The vehicle 1 comprises a pair of right-and-left side sills **2.** Each of the pair of side sills **2** extends straightly in a longitudinal direction. The side sill **2** has a structure having a closed-cross section, and the closed-cross section extends straightly in the longitudinal direction, which will be specifically described later.

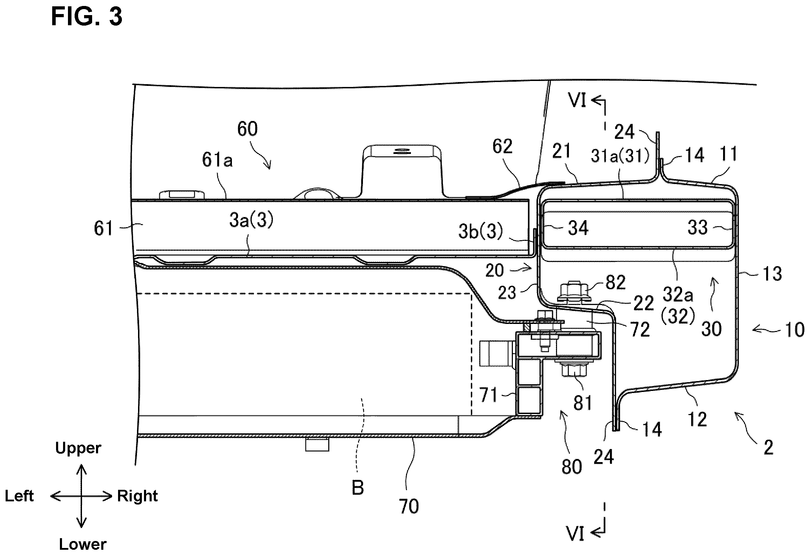

The vehicle **1** comprises a floor panel **3** which forms a floor face of a cabin. The floor panel **3** comprises a floor panel body **3a** (see FIGS. **3** and others) which expands in the vehicle width direction and in the longitudinal direction and floor-panel joint portions **3b** (see FIGS. **3** and others) which are fixed to the side sills **2** by welding. The left-side floor-panel joint portion **3b** is fixedly welded to a right-side portion of the left-side side sill **2.** The right-side floor-panel joint portion **3b** is fixedly welded to a left-side portion of the right-side side sill **2.**

A kick-up portion **5** which rises upward is arranged at a rear end of the floor panel **3.** A rear floor panel **6** expands rearward from the kick-up portion **5.** The rear floor panel **6** forms a floor face of a luggage room mainly.

Two cross members **60** extending in the lateral direction are arranged above the floor panel **3.** The two cross members **60** are aligned such that they are separated from each other in the longitudinal direction. A longitudinal position of the rear-side cross member **60** is the same as that of a center pillar, which is not illustrated.

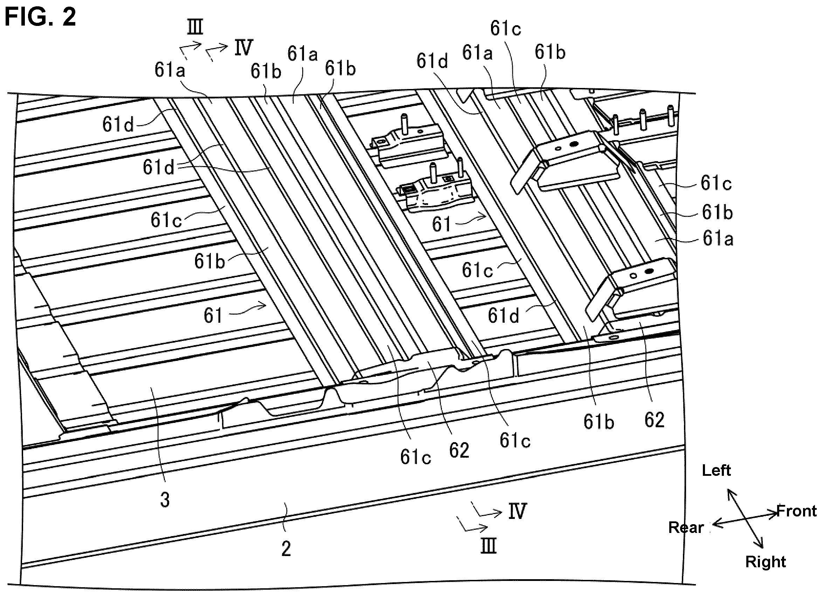

As shown in FIG. **2****,** the cross member **60** includes a cross-member body **61** and brackets **62.** The brackets **62** are fixed to both sides, in the lateral direction, of the cross-member body **61** (the right-side bracket **62** is shown in FIG. **2** only). The left-side bracket **62** is fixed to the left-side side sill **2** by welding, and the right-side bracket **62** is fixed to the right-side side sill **2** by welding. Thereby, the both-side end portions, in the lateral direction, of the cross member **60** are fixed to the side sills **2.** A lower end of the cross-member body **61** is fixed to an upper face of the floor panel **3.**

The cross-member body **61** has a cross section which is of a M-letter shape. The cross-member body **61** comprises two upper face portions **61a,** four side face portions **61b,** and a joint face portion **61c** which is joined to the floor panel **3.** A cross-member ridgeline portion **61d** extending in the lateral direction is formed between the upper face portion **61a** and the side face portion **61b** and also between the joint face portion **61c** and the side face portion **61b.**

As shown in FIG. **3****,** a battery **B** is arranged below the floor panel **3.** The battery **B** is arranged in a state where it is stored in a battery case **70.** The battery **B** is provided in a range which overlaps a roughly whole part of the floor panel **3** in a plan view.

The battery **B** is supported at lower wall portions (inner lower-wall portions **22** described later) of the side sills **2** together with the battery case **70** via support portions **80.** Specifically, a bracket **71** extending outward, in the vehicle width direction, of a vehicle body is fixed to an outward portion, in the vehicle width direction, (to a right-side portion in FIG. **3****)** of the battery case **70.** A bolt **81** is inserted into an outward-side end portion, in the vehicle width direction, (into a right-side end portion in FIG. **3****)** of the bracket **71.** The bolt **81** is supposed to engage with a nut **82** which is fixed to a portion inside the closed-cross section of the inner lower-wall portion **22** of the side sill **2.** The bolt **81** is inserted into the bracket **71** from below and fixed by the nut **82.** Thereby, the battery **B** is supported at the side sills **2** via the battery case **70** and the brackets **71.** The bolt **81** and the nut **82** constitute a support portion **80.** A bush **72** is arranged around the bolt **81** between the bracket **71** and the inner lower-wall portion **22.** The bush **72** is made of a resilient member.

### (2) Side Sill

Hereafter, a structure of the side sill **2** will be described specifically. As described above, since the vehicle-body structure of the vehicle **1** is laterally symmetrical, the structure of the right-side side sill **2** will be described specifically, and specific description of the left-side side sill **2** is omitted here. Further, in the description of the right-side side sill **2,** the right side corresponds to the outward side, in the vehicle width direction, of the vehicle body and the left side corresponds to the inward side, in the vehicle width direction, of the vehicle body.

### (2-1) Outer Panel, Inner Panel

As shown in FIG. **3****,** the side sill **2** includes an outer panel **10** positioned on the right side relatively and an inner panel **20** positioned on the left side relatively. A material of the outer panel **10** and the inner panel **21** is not limited to a particular one, but iron is applicable, for example.

The outer panel **10** has a hat-shaped cross section which is open to the left side. The outer panel **10** comprises an outer upper-wall portion **11** which expands in the longitudinal direction and in the lateral direction, an outer lower-wall portion **12** which is provided to face the outer upper-wall portion **11** in a vertical direction and expands in the longitudinal direction and in the lateral direction, and an outer side-wall portion **13** which connects, in the vertical direction, a right-side end portion of the outer upper-wall portion **11** and a right-side end portion of the outer lower-wall portion **12** and expands in the vertical direction and in the longitudinal direction. A pair of outer flanges **14** extend in the vertical direction from a left-side end portion of the outer upper-wall portion **11** and a left-side wall portion of the outer lower-wall portion **12,** respectively. The outer upper-wall portion **11** is inclined such that it extends obliquely rightward-and-downward. The outer lower-wall portion **12** is inclined such that it extends obliquely rightward-and-upward. The left-side end portion of the outer upper-wall portion **11** is positioned on the right side of the left-side end portion of the outer lower-wall portion **12.**

The inner panel **20** has a hat-shaped cross section which is open to the right side. The inner panel **20** comprises an inner upper-wall portion **21** which expands in the longitudinal direction and in the lateral direction, an inner lower-wall portion **22** which is provided to face the inner upper-wall portion **21** in the vertical direction and expands in the longitudinal direction and in the lateral direction, and an inner side-wall portion **23** which connects, in the vertical direction, a left-side end portion of the inner upper-wall portion **21** and a left-side end portion of the inner lower-wall portion **22** and expands in the vertical direction and in the longitudinal direction. A pair of inner flanges **24** extend in the vertical direction from a right-side end portion of the inner upper-wall portion **21** and a right-side wall portion of the inner lower-wall portion **22,** respectively. The inner upper-wall portion **21** is inclined such that it extends obliquely leftward-and-downward. The inner lower-wall portion **22** extends straightly in the lateral direction. The inner lower-wall portion **22** has an insertion hole of the bolt **81.**

The outer flanges **14** of the outer panel **10** and the inner flanges **24** of the inner panel **20** are provided to overlap each other in a state where their openings face each other in the lateral direction. The outer flanges **14** and the inner flanges **24** are joined by welding. Thereby, the side sill **2** has the structure having the rectangular-shaped closed-cross section which is formed by the outer upper-wall portion **11,** the outer lower-wall portion **12,** the outer side-wall portion **13,** the inner upper-wall portion **21,** the inner lower-wall portion **22,** and the inner side-wall portion **23.**

The floor panel **3** and the cross member **60** are fixed to the inner panel **20.** Specifically, as shown in FIG. **3****,** the floor-panel joint portion **3b** of the floor panel **3** is formed by a right-side end portion of the floor panel body **3a** which is bent upward, and extends along the inner side-wall portion **23** and is joined to a left-side face of the inner side-wall portion **23.** The bracket **62** of the cross member **60** is provided to cover a corner portion between the inner upper-wall portion **21** and the inner side-wall portion **23.** The bracket **62** has a portion for welding which extends continuously along the inner upper-wall portion **21.** This welding portion is joined to the inner upper-wall portion **21.** Herein, FIG. **3** shows a fixation structure of the rear-side cross member **60** and the inner panel **20.** The fixation structure of the front-side cross member **60** and the inner panel **20** are the same as the fixation structure of the rear-side cross member **60** and the inner panel **20.**

### (2-2) Reinforcement

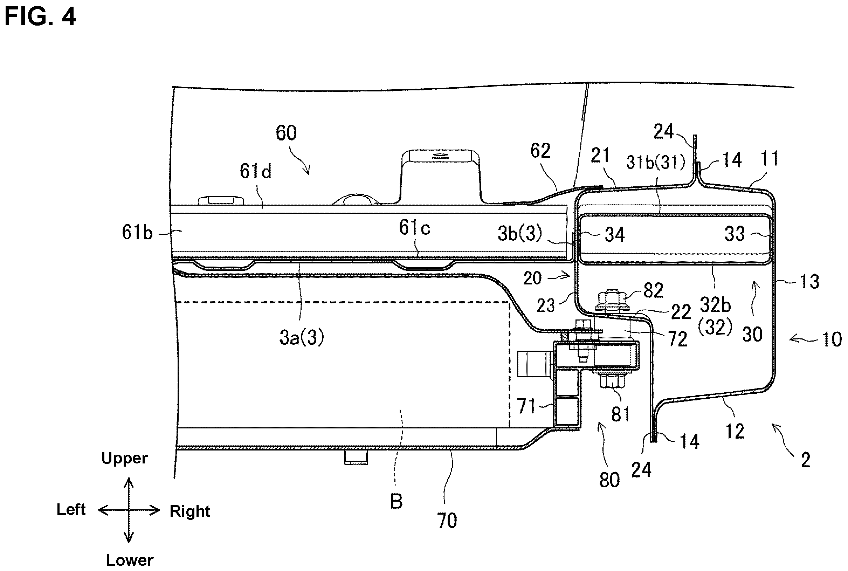

As shown in FIGS. **3** and **4****,** a reinforcement **30** to reinforce the side sill **2** is arranged inside the closed-cross section of the side sill **2.** The reinforcement **30** is formed by pressing of a pipe. The reinforcement **30** extends in the longitudinal direction inside the closed-cross section of the side sill **2.** The material strength of the reinforcement **30** is lower than that of the cross-member body **61.** Herein, the material strength means the strength of a plate itself which constitutes the member. The material strength is a parameter to be determined by the tensional strength and the thickness of the plate, for example. The higher the tensional strength is, the higher the material strength is. Also, the larger the thickness is, the higher the material strength is. The material of the reinforcement **30** is not limited to a particular one, but it is iron, for example.

The reinforcement **30** is arranged over an entire part of the side sill **2.** The reinforcement **30** is seamlessly arranged at a position which corresponds to the cross members **60** and also at an intermediate position between the two cross members **60.** The reinforcement **30** is arranged at a position which overlaps the cross members **60** in the vertical direction.

The reinforcement **30** has a structure having a rectangular-shaped closed-cross section. The reinforcement **30** includes an upper-side lateral wall portion **31** which is positioned at a relatively upper side and expands in the longitudinal direction and in the lateral direction and a lower-side lateral wall portion **32** which is provided to face the upper-side lateral wall portion **31** in the vertical direction and expands in the longitudinal direction and in the lateral direction. The reinforcement **30** includes an outward-side vertical wall portion **33** which is positioned at a relatively right side and expands in the longitudinal direction and in the vertical direction and an inward-side vertical wall portion **34** which is provided to face the outward-side vertical wall portion **33** in the lateral direction and expands in the longitudinal direction and in the vertical direction. The outward-side vertical wall portion **33** connects, in the vertical direction, a right-side end portion of the upper-side lateral wall portion **31** and a right-side end portion of the lower-side lateral wall portion **32.** The inward-side vertical wall portion **34** connects, in the vertical direction, a left-side end portion of the upper-side lateral wall portion **31** and a left-side end portion of the lower-side lateral wall portion **32.** The upper-side lateral wall portion **31,** the lower-side lateral wall portion **32,** the outward-side vertical wall portion **33,** and the inward-side vertical wall portion **34** are made of a single member and formed integrally seamlessly.

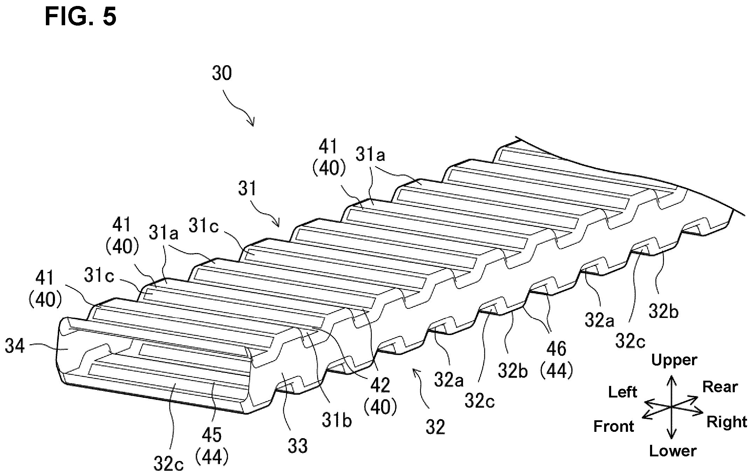

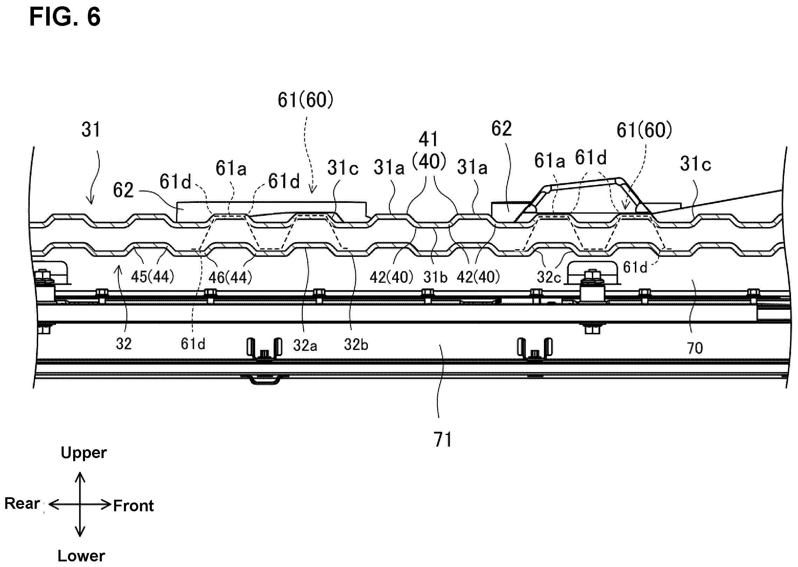

As shown in FIGS. **5** and **6****,** the upper-side lateral wall portion **31** is of an uneven (concave-and-convex) shape when viewed in the lateral direction. Specifically, the upper-side lateral wall portion **31** comprises a first upper-face portion **31a** which is relatively positioned at an upper side and expands in the longitudinal direction and in the lateral direction, a second upper-face portion **31b** which is relatively positioned at a lower side and expands in the longitudinal direction and in the lateral direction, and an upper-side connection portion 31c which connects, in the vertical direction, an end portion, in the longitudinal direction, of the first upper-face portion **31a** and an end portion, in the longitudinal direction, of the second upper-face portion **31b.** The first upper-face portion **31a** and the second upper-face portion **31b** are aligned in the longitudinal direction alternately. The upper-side connection portion **31c** to connect the front-side end portion of the first upper-face portion **31a** and the rear-side end portion of the second upper-face portion **31b** is inclined such that it expands obliquely forward-and-downward. The upper-side connection portion **31c** to connect the rear-side end portion of the first upper-face portion **31a** and the front-side end portion of the second upper-face portion **31b** is inclined such that it expands obliquely forward-and-upward. The width, in the longitudinal direction, of the first upper-face portion **31a** is the same as the width, in the longitudinal direction, of the second upper-face portion **31b.** The width, in the longitudinal direction, of the first upper-face portion **31a** and the second upper-face portion **31b** is narrower than the width, in the longitudinal direction, of the cross member **60** and the minimum of a distance between the pair of cross members **60.** Specifically, the width, in the longitudinal direction, of the first upper-face portion **31a** and the second upper-face portion **31b** is narrower than a half of the width, in the longitudinal direction, of the cross member **60** and also narrower than a half of the minimum of the distance between the pair of cross members **60.** The length, in the vertical direction, of the upper-side connection portion **31c,** i.e., the distance, in the vertical direction, of the first upper-face portion 3**1a** and the second upper-face portion **31b** is about 1/4 of the distance between the upper-side lateral wall portion **31** and the lower-side lateral wall portion **32.**

Upper-side ridgeline portions **40** extending in the lateral direction are formed between the first upper-face portion **31a** and the upper-side connection portion **31c** and between the second upper-face portion **31b** and the upper-side connection portion **31c,** respectively. The upper-side ridgeline portion **40** includes a first upper-side ridgeline portion **41** which is positioned at a front-side end portion or a rear-side end portion of the first upper-face portion **31a** and a second upper-side ridgeline portion **42** which is positioned at a front-side end portion or a rear-side end portion of the second upper-face portion **31b.** That is, the four upper-side ridgeline portions **40** are formed by one-cycle uneven shape comprising the first upper-face portion **31a,** the second upper-face portion **31b,** and the upper-side connection portions **31c.** The cycle-number of the uneven shape multiplied by four equals the number of the upper-side ridgeline portions **40** which are formed at the upper-side lateral wall portion **31** as a whole.

As shown in FIG. **6****,** the vertical position of the first upper-face portion **31a** is the same as the vertical position of the upper face portion **61a** of the cross member **60.** Accordingly, the first upper-side ridgeline portion **41** has the same vertical position as the upper-side cross-member ridgeline portion **61d.** Further, the first upper-side ridgeline portion **41** has the same longitudinal position as the upper-side cross-member ridgeline portion **61d.** The vertical position of the second upper-face portion **31b** is located between the upper face portion **61a** of the cross member **60** and the floor panel body **3a.** Specifically, the vertical position of the second upper-face portion **31b** is located at a position which is located above the center between the upper face portion **61a** of the cross member **60** and the floor panel body **3a.** Accordingly, the vertical position of the second upper-side ridgeline portion **42** is located at a position which is located above the center between the upper face portion **61a** of the cross member **60** and the floor panel body **3a.**

As shown in FIGS. **5** and **6****,** the lower-side lateral wall portion **32** is of an uneven (concave-and-convex) shape when viewed in the lateral direction. Specifically, the lower-side lateral wall portion **32** comprises a first lower-face portion **32a** which is relatively positioned at an upper side and expands in the longitudinal direction and in the lateral direction, a second lower-face portion **32b** which is relatively positioned at a lower side and expands in the longitudinal direction and in the lateral direction, and a lower-side connection portion **32c** which connects, in the vertical direction, an end portion, in the longitudinal direction, of the first lower-face portion **32a** and an end portion, in the longitudinal direction, of the second lower-face portion **32b.** The first lower-face portion **32a** and the second lower-face portion **32b** are aligned in the longitudinal direction alternately. The lower-side connection portion **32c** to connect the front-side end portion of the first lower-face portion **32a** and the rear-side end portion of the second lower-face portion **32b** is inclined such that it expands obliquely forward-and-downward. The lower-side connection portion **32c** to connect the rear-side end portion of the first lower-face portion **32a** and the front-side end portion of the second lower-face portion **32b** is inclined such that it expands obliquely forward-and-upward. The width, in the longitudinal direction, of the first lower-face portion **32a** is the same as the width, in the longitudinal direction, of the second lower-face portion **32b.** The width, in the longitudinal direction, of the first lower-face portion **32a** and the second lower-face portion **32b** is the same as the width, in the longitudinal direction, of the first upper-face portion **31a** and the second upper-face portion **31b.** The vertical length of the lower-side connection portion **32c,** i.e., the distance, in the vertical direction, between the first lower-face portion **32a** and the second lower-face portion **32b** is the same as the vertical distance between the first upper-face portion **31a** and the second upper-face portion **31b.**

Lower-side ridgeline portions **44** extending in the lateral direction are formed between the first lower-face portion **32a** and the lower-side connection portion **32c** and between the second lower-face portion **32b** and the lower-side connection portion **32c,** respectively. The lower-side ridgeline portion **44** includes a first lower-side ridgeline portion **45** which is positioned at a front-side end portion or a rear-side end portion of the first lower-face portion **32a** and a second lower-side ridgeline portion **46** which is positioned at a front-side end portion or a rear-side end portion of the second lower-face portion **32b.** That is, the four lower-side ridgeline portions **44** are formed by one-cycle uneven shape comprising the first lower-face portion **32a,** the second lower-face portion **32b,** and the lower-side connection portions **32c.** The cycle-number of the uneven shape multiplied by four equals the number of the lower-side ridgeline portions **44** which are formed at the lower-side lateral wall portion **32** as a whole.

As shown in FIG. **4****,** the vertical position of the first lower-face portion **32a** is above the floor panel body **3a.** Accordingly, the vertical position of the first lower-side ridgeline portion **45** is above the floor panel body **3a.** The vertical position of the second lower-face portion **32b** is the same as the vertical position of the floor panel body **3a.** Accordingly, the vertical position of the second lower-side ridgeline **46** is the same as the vertical position of the floor panel body **3a.** Further, the vertical position of the second lower-face portion **32b** is slightly below the joint face portion **61c** of the cross-member body **61.** Accordingly, the second lower-side ridgeline portion **46** is slightly below the lower-side cross-member ridgeline portion **61d.**

As shown in FIG. **6****,** the longitudinal position of the first upper-face portion **31a** is the same as the longitudinal position of the first lower-face portion **32a.** The longitudinal position of the second upper-face portion **31b** is the same as the longitudinal position of the second lower-face portion **32b.** The longitudinal position of the second upper-side ridgeline portion **42** is the same as the longitudinal position of the second lower-side ridgeline portion **46.** Further, the vertical distance between the first upper-face portion **31a** and the first lower-face portion **32a,** the vertical distance between the second upper-face portion **31b** and the second lower-face portion **32b,** and the vertical distance between the upper-side connection portion **31c** and the lower-side connection portion **32c** are the same.

The outward-side vertical wall portion **33** and the inward-side vertical wall portion **34** have the shape corresponding to the uneven shape of the upper-side lateral wall portion **31** and the lower-side lateral wall portion **32.** The outward-side vertical wall portion **33** is fixed to the outer side-wall portion **13.** The inward-side vertical wall portion **34** is fixed to the inner side-wall portion **23.** The respective fixation methods between the outward-side vertical wall portion **33** and the outer side-wall portion **13** and between the inward-side vertical wall portion **34** and the inner side-wall portion **23** are not limited to a particular one, but welding, adhesion by an adhesive agent, bolt fastening or the like are applicable, for example.

An area of the closed-cross section which is formed by the upper-side lateral wall portion **31,** the lower-side lateral wall portion **32,** the outward-side vertical wall portion **33,** and the inward-side vertical wall portion **34** does not change in the longitudinal direction.

### (3) Operation (Movement) in Vehicle Side Collision

The reinforcement **30** absorbs part of the collision load in the vehicle side collision and transmits the rest of the collision load to the cross members **60** and the floor panel **3,** in particular.

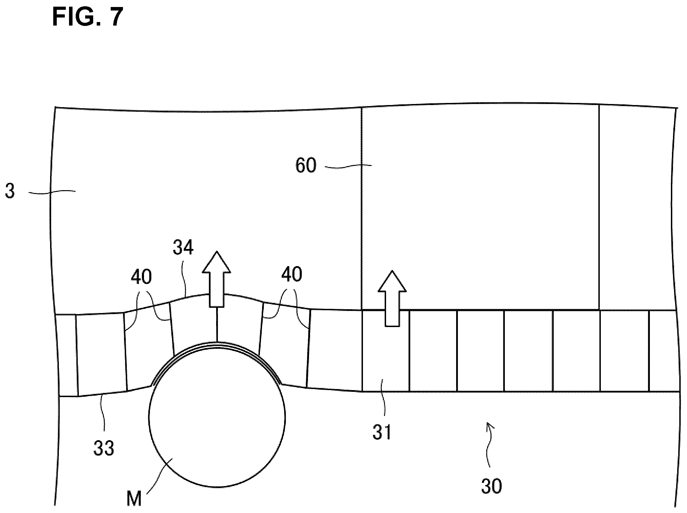

FIG. 7 shows a deformation state of the reinforcement **30** in the vehicle side collision. Herein, a case where a collision object **M** hits against a section positioned on the rearward side of the cross member **60** is assumed.

When the collision object **M** comes in toward the inside of the cabin in the vehicle side collision as shown in FIG. **7****,** part of the reinforcement **30** is compressively deformed. Since the reinforcement **30** has the plural upper-side ridgeline portions **40** and the plural lower-side ridgeline portions **44,** its rigidity against the collision load in the lateral direction is rather high. Accordingly, a portion of the reinforcement **30** which receives the large collision load, i.e., is close to an application point of the collision load, is compressively deformed. Thereby, part of the collision load is absorbed.

Meanwhile, another portion of the reinforcement **30** which is located on the inward side, in the vehicle width direction, thereof, i.e., is away from the application point of the collision load, is pushed toward the inward side, in the vehicle width direction, thereof. Herein, the bending deformation of the upper-side lateral wall portion **31** and the lower-side lateral wall portion **32** is suppressed. Thereby, the reinforcement **30** is moved to the inward side, in the vehicle width direction, of the vehicle body as a whole. Consequently, the collision load is transmitted to the cross member **60** via the reinforcement **30.**

As described above, in the vehicle side collision, the reinforcement **30** can absorb the collision load applied to the side sill **2** properly and also transmit the collision load to the cross member **60** and the like properly.

### (4) Effects of First Embodiment

In the first embodiment, the lower structure of the vehicle **1** comprises the reinforcement **30** which extends in the vehicle longitudinal direction inside the closed-cross section of each of the pair of side sills **2** and reinforces the side sill **2.** The reinforcement **30** includes the upper-and-lower lateral wall portions **31, 32** which expand in the vehicle longitudinal direction and in the vehicle width direction and the outward-side and inward-side vertical wall portions **33, 34** which connect, in the vertical direction, the right-side and left-side end portions of the upper-and-lower lateral wall portions **31, 32.** The upper-and-lower lateral wall portions **31, 32** have the upper-side and lower-side ridgeline portions **40, 44** which extend in the vehicle width direction and are aligned in the vehicle longitudinal direction, respectively. Accordingly, part of the collision load can be absorbed by the compressive deformation of the upper-side and lower-side ridgeline portions **40, 44** in the vehicle wide collision. Further, since the upper-and-lower lateral wall portions **31, 32** are connected by the outward-side and inward-side vertical wall portions **33, 34,** the bending deformation of the upper-and-lower lateral wall portions **31, 32** caused by the collision load can be suppressed. Thereby, part of the collision load can be transmitted to the cross member **60.** Further, since the reinforcement **30** is constituted by the upper-and-lower lateral wall portions **31, 32** and the outward-side and inward-side vertical wall portions **33, 34** and any wall portion expanding in the vertical direction and in the vehicle width direction is unnecessary, the weight increase can be suppressed compared to a case where a cylindrical structure extending in the vehicle width direction is applied. Also, since the upper-side and lower-side ridgeline portions **40, 44** are formed just by applying the bending process to the upper-and-lower lateral wall portions **31, 32,** the weight increase of the reinforcement **30** can be suppressed properly even if the upper-side and lower-side ridgeline portions **40, 44** are provided. Thus, the first embodiment can properly improve the absorption amount of the collision load in the vehicle side collision, suppressing the increase of the vehicle-body weight.

In particular, according to the first embodiment, the collision load can be dispersedly received at the upper-and-lower lateral wall portions **31, 32** because both the upper-and-lower lateral wall portions **31, 32** have the ridgeline portions. The first embodiment can improve the absorption amount of the collision load in the vehicle side collision properly.

In the first embodiment, the upper-side lateral wall portion **31** comprises the first upper-face portion **31a** located at the relatively upper side, the second upper-face portion **31b** located at the relatively lower side, and the upper-side connection portion **31c** connecting the first upper-face portion **31a** and the second upper-face portion **31b** in the vertical direction. The upper-side ridgeline portions **40** are positioned between the first upper-face portion **31a** and the upper-side connection portion **31c** and between the second upper-face portion **31b** and the upper-side connection portion **31c,** respectively. Further, the lower-side lateral wall portion **32** comprises the first lower-face portion **32a** located at the relatively upper side, the second lower-face portion **32b** located at the relatively lower side, and the lower-side connection portion **32c** connecting the first lower-face portion **32a** and the second lower-face portion **32b** in the vertical direction. The lower-side ridgeline portions **44** are positioned between the first lower-face portion **32a** and the lower-side connection portion **32c** and between the second lower-face portion **32b** and the lower-side connection portion **32c,** respectively. According to this embodiment, since the upper-side lateral wall portion **31** and the lower-side lateral wall portion **32** are comprised of the plural flat faces, the bending deformation can be suppressed. Thereby, the collision load can be transmitted to the cross member **60.** Moreover, since the upper-side ridgeline portions **40** and the lower-side ridgeline portions **44** are composed of many ridgelines, the energy absorption by means of the axial compression can be improved. Accordingly, the first embodiment can improve the absorption amount of the collision load in the vehicle side collision.

In the first embodiment, the plural cross members **60** are provided to be separated from each other in the vehicle longitudinal direction, and the reinforcement **30** is arranged at the portion inside the side sill **2** which includes an area where the plural cross members **60** are provided. Accordingly, even if the vehicle side collision occurs at a point, in the vehicle longitudinal direction, where the cross members **60** do not exist, the collision load can be transmitted to the cross member **60** via the lateral wall portions because the bending deformation is suppressed. Accordingly, the first embodiment can improve the absorption amount of the collision load in the vehicle side collision.

In the first embodiment, the upper-side ridgeline portion **40** and the lower-side ridgeline portion **44** are located the same positions in the vehicle longitudinal direction. Accordingly, the collision load can be dispersed to the upper-side lateral portion **31** and the lower-side lateral portion **32** equally. The first embodiment can improve the absorption amount of the collision load in the vehicle side collision.

In the first embodiment, the cross member **60** includes the cross-member ridgeline portion **61d** extending in the vehicle width direction. The reinforcement **30** is provided at the same position, in the vehicle longitudinal direction, as the cross member **60.** Part of the upper-side ridgeline portions **40** of the upper-side lateral wall portion **31** (the first upper-side ridgeline portion **41)** is located at the same level, in the vertical direction, as the upper-side cross-member ridgeline portion **61d.** Accordingly, the transmission efficiency of the collision load from the side sill **2** to the cross member **60** is improved. The first embodiment can improve the absorption amount of the collision load in the vehicle side collision.

In the first embodiment, the pair of lateral wall portions **31, 32** and the pair of vertical wall portions **33, 34** are integrated seamlessly. Accordingly, the bending deformation of these lateral wall portions **31, 32** can be suppressed easily. Thereby, these lateral wall portions **31, 32** can easily transmit the collision load to the cross member **60** in the vehicle width direction. Further, the weight increase of the reinforcement **30** can be suppressed compared to a case where the lateral wall portions **31, 32** and the vertical wall portions **33, 34** are all made of separated (different) members. Consequently, the first embodiment can improve the absorption amount of the collision load in the vehicle side collision, suppressing the increase of the vehicle-body weight.

In the first embodiment, part of the lower-side ridgeline portions **44** of the lower-side lateral wall portion **32** (the second lower-side ridgeline portion **46)** is located at the same level, in the vertical direction, as the floor panel **3.** Accordingly, part of the collision load in the vehicle side collision can be transmitted to the floor panel **3** efficiently. Further, since it is suppressed by the floor panel **3** that the reinforcement **30** comes in to the inward side, in the vehicle width direction, of the vehicle body, the bending deformation of the reinforcement **30** is suppressed. Consequently, the transmission efficiency of the collision load from the side sill **d2** to the cross member **60** is improved. The first embodiment can properly transmit the collision load applied to the side sill **2** in the vehicle side collision.

### < Second Embodiment >

Hereafter, a second embodiment will be described specifically referring to the drawings. Herein, the same structures as the above-described first embodiment have the same reference characters and their detailed description is omitted here.

### (5) Reinforcement

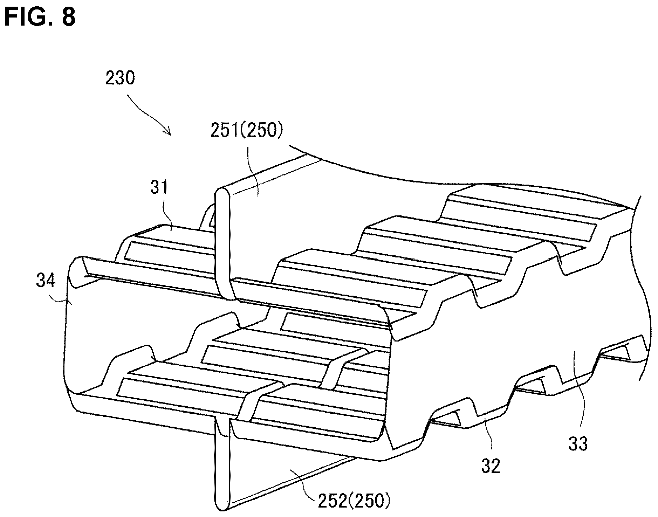

The shape of a reinforcement **230** of the second embodiment is different from the first embodiment. Specifically, as shown in FIG. **8****,** the reinforcement **230** has plural flanges **250** which expand in the longitudinal direction and in the vertical direction at a middle portion, in the vehicle width direction, thereof. The plural flanges **250** comprise an upper-side flange **251** which extends upward from the upper-side lateral wall portion **31** and a lower-side flange **252** which extends downward from the lower-side lateral wall portion **32.**

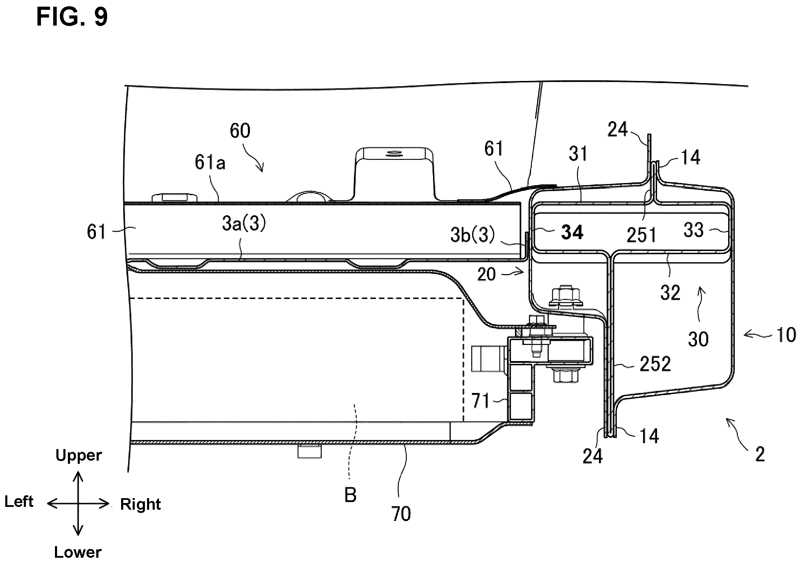

As shown in FIG. **9****,** the upper-side flange **251** is located at a position of the upper-side outer flange **14** and the upper-side inner flange **24.** The upper-side flange **251** is laterally interposed between the upper-side outer flange **14** and the upper-side inner flange **24.** Thereby, the upper-side flange **251** is fixed to the side sill **2.**

The lower-side flange **252** is located at a position of the lower-side outer flange **14** and the lower-side inner flange **24.** The lower-side flange **252** is laterally interposed between the lower-side outer flange **14** and the lower-side inner flange **24.** Thereby, the lower-side flange **252** is fixed to the side sill **2.**

### (6) Effects of Second Embodiment

In the second embodiment, the bending deformation of the upper-side lateral wall portion **31** can be suppressed easily by the upper-side flange **251.** Further, the bending deformation of the lower-side lateral wall portion **32** can be suppressed easily by the lower-side flange **252.** Thereby, these lateral wall portions **31, 32** can easily transmit the collision load to the cross member **60** in the vehicle width direction. Consequently, the second embodiment can improve the absorption amount of the collision load in the vehicle side collision, suppressing the increase of the vehicle body.

Further, in the second embodiment, the upper-side flange **251** and the lower-side flange **252** are interposed, in the vehicle width direction, between the outer flange **14** and the inner flange **24** and fixed to the side sill **2.** Thereby, the bending deformation of the upper-side and lower-side lateral wall portions **31, 32** can be suppressed effectively, so that these lateral wall portions **31, 32** easily transmit the collision load to the cross member **60** in the vehicle width direction. The second embodiment **2** can improve the absorption amount of the collision load in the vehicle side collision.

### < Third Embodiment >

Hereafter, a third embodiment will be described specifically referring to the drawings. Herein, the same structures as the above-described first and second embodiments have the same reference characters and their detailed description is omitted here.

### (7) Reinforcement

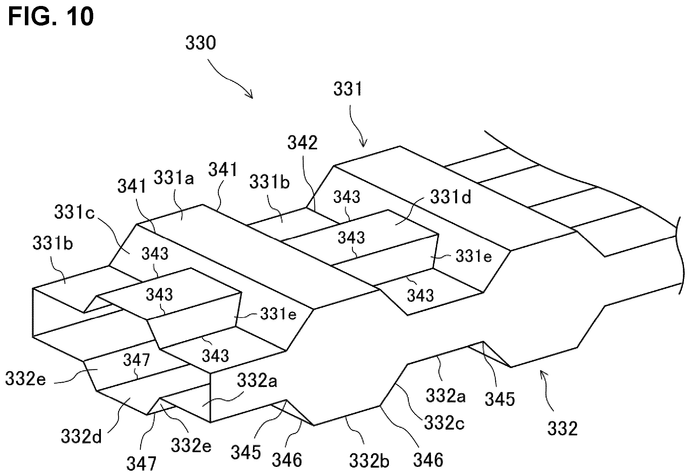

The shape of a reinforcement **330** of the third embodiment is different from the first and second embodiments. Specifically, as shown in FIG. **10****,** the reinforcement **330** has a third upper-face portion **331d** extending in the longitudinal direction at a middle position, in the lateral direction, of the upper-side lateral wall portion **331.** Further, the reinforcement **330** has a third lower-face portion **332d** extending in the longitudinal direction at a middle position, in the lateral direction, of the lower-side lateral wall portion **332.**

The vertical position of the third upper-face portion **331d** is located between the first upper-face portion **331a** and the second upper-face portion **331b.** Between the third upper-face portion **331d** and the second upper-face portion **331b** is formed a second upper-side connection portion **331e** which connects these upper-face portions **331d, 331b** in the vertical direction.

Third upper-side ridgeline portions **343** extending in the longitudinal direction are positioned between the third upper-face portion **331d** and the second upper-side connection portion **331e** and between the second upper-face portion **331b** and the second upper-side connection portion **331e.** The third upper-side ridgeline portion **343** is located at a middle position, in the lateral direction, of the upper-side lateral wall portion **331.** The third upper-side ridgeline portion **343** extends in a direction perpendicular to a first upper-side ridgeline portion **341** and a second upper-side ridgeline portion **342.** A ridgeline portion extending in the lateral direction is positioned between the third upper-face portion **331d** and the upper-side connection portion **331c.**

The vertical position of the third lower-face portion **332d** is located between the first lower-face portion **332a** and the second lower-face portion **332b.** Between the third lower-face portion **332d** and the second lower-face portion **332b** is formed a second lower-side connection portion **332e** which connects these lower-face portions **332d, 332b** in the vertical direction.

Third lower-side ridgeline portions **347** extending in the longitudinal direction are positioned between the third lower-face portion **332d** and the second lower-side connection portion **332e** and between the second lower-face portion **332b** and the second lower-side connection portion **332e.** The third lower-side ridgeline portion **347** is located at a middle position, in the lateral direction, of the lower-side lateral wall portion **332.** The third lower-side ridgeline portion **347** extends in a direction perpendicular to a first lower-side ridgeline portion **345** and a second lower-side ridgeline portion **346.** A ridgeline portion extending in the lateral direction is positioned between the third lower-face portion **332d** and the lower-side connection portion **332c,** which is not specifically illustrated.

The position, in the lateral direction, of the third upper-face portion **331d** and the position, in the lateral direction, of the third lower-face portion **332d** are the same. The position, in the lateral direction, of the third upper-side ridgeline portion **343** and the position, in the lateral direction, of the third lower-side ridgeline portion **347** are the same.

### (8) Effects of Third Embodiment

In the third embodiment, the bending deformation of the upper-side lateral wall portion **331** can be suppressed effectively by the third upper-side ridgeline portion **343.** Also, the bending deformation of the lower-side lateral wall portion **332** can be suppressed effectively by the third lower-side ridgeline portion **347.** Thereby, these lateral wall portions **331, 332** can easily transmit the collision load to the cross member **60** in the vehicle width direction. Consequently, the third embodiment can improve the absorption amount of the collision load in the vehicle side collision, suppressing the increase of the vehicle-body weight.

### < Fourth Embodiment >

Hereafter, a fourth embodiment will be described specifically referring to the drawings. Herein, the same structures as the above-described first through third embodiments have the same reference characters and their detailed description is omitted here.

### (9) Reinforcement

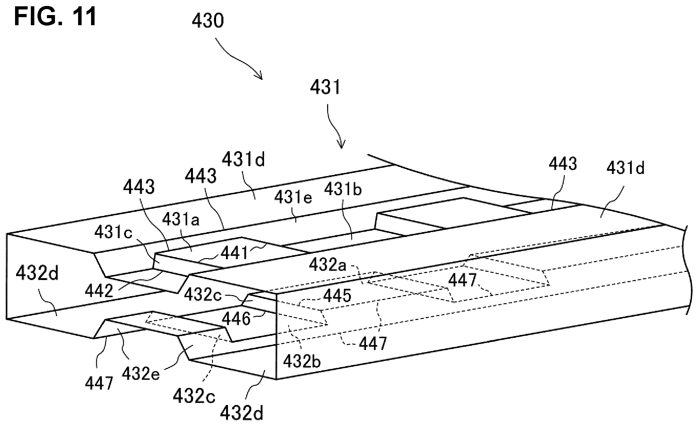

The shape of a reinforcement **430** of the fourth embodiment is different from the first through third embodiments. Specifically, as shown in FIG. **11****,** the reinforcement **430** has fourth upper-face portions **431d** extending in the longitudinal direction at both-side portions, in the lateral direction, of an upper-side lateral wall portion **431,** respectively. Further, the reinforcement **430** has fourth lower-face portions **432d** extending in the longitudinal direction at both-side portions, in the lateral direction, of a lower-side lateral wall portion **432,** respectively.

The vertical position of the fourth upper-face portion **431d** is above a first upper-face portion **431a.** A third upper-side connection portion **431e** which connects the fourth upper-face portion **431d,** a first upper-face portion **431a,** a second upper-face portion **431b,** and an upper-side connection portion **431c** in the vertical direction is formed among the fourth upper-face portion **431d,** the first upper-face portion **431a,** and the second upper-face portion **431b.**

Fourth upper-side ridgeline portions **443** extending in the longitudinal direction are positioned between the fourth upper-face portion **431d** and the third upper-side connection portion **431e** and between the first upper-face portion **431a** and the third upper-side connection portion **431e.** The upper-side ridgeline portion **443** is located at a middle position, in the lateral direction, of the upper-side lateral wall portion **431.** The upper-side ridgeline portion **443** extends in a direction perpendicular to a first upper-side ridgeline portion **441** and a second upper-side ridgeline portion **442.**

The vertical position of a fourth lower-face portion **432d** is below a first lower-face portion **432a.** A third lower-side connection portion **432e** which connects a fourth lower-face portion **432d,** a first lower-face portion **432a,** a second lower-face portion **432b,** and a lower-side connection portion **432c** in the vertical direction is formed among the fourth lower-face portion **432d,** the first lower-face portion **432a,** and the second lower-face portion **432b.**

Fourth lower-side ridgeline portions **447** extending in the longitudinal direction are positioned between the fourth lower-face portion **432d** and the third lower-side connection portion **432e** and between the first lower-face portion **432a** and the third lower-side connection portion **432e.** The lower-side ridgeline portion **447** is located at a middle position, in the lateral direction, of the lower-side lateral wall portion **432.** The lower-side ridgeline portion **447** extends in a direction perpendicular to a first lower-side ridgeline portion **445** and a second lower-side ridgeline portion **446.**

### (10) Effects of Fourth Embodiment

In the fourth embodiment, the bending deformation of the upper-side lateral wall portion **431** can be suppressed effectively by the fourth upper-side ridgeline portion **443.** Also, the bending deformation of the lower-side lateral wall portion **432** can be suppressed effectively by the fourth lower-side ridgeline portion **447.** Thereby, these lateral wall portions **431, 432** can easily transmit the collision load to the cross member **60** in the vehicle width direction. Consequently, the fourth embodiment can improve the absorption amount of the collision load in the vehicle side collision, suppressing the increase of the vehicle-body weight.

Further, in the fourth embodiment, when the reinforcement **430** is compressively deformed in the lateral direction in the vehicle side collision, the second upper-face portion **431b** and the first lower-face portion **432a** approach each other in the vertical direction and contact each other. Thereby, it can be suppressed that the reinforcement **430** is compressively deformed excessively, so that the collision load can be properly transmitted to the inward side, in the vehicle width direction, of the vehicle body. Accordingly, the fourth embodiment can properly transmit the collision load applied to the side sill **2** in the vehicle side collision.

### < Other Embodiments >

The present invention is not limited to the above-described embodiments and any other modifications are applicable within a scope of the claims.

While the ridgeline portions are formed at the upper-side lateral wall portions **31, 331, 431** and the lower-side lateral wall portions **32, 332, 432,** respectively in the above-described first through fourth embodiments, either one of these lateral wall portions **31, 331, 431** and **32, 332, 432** may have the ridgeline portions.

In the above-described first through fourth embodiments, the longitudinal positions of the upper-side ridgeline portions **40, 341, 441, 342, 442** are the same as the longitudinal positions of the lower-side ridgeline portions **44, 345, 445, 346, 446.** However, these longitudinal positions are different in the longitudinal direction.

In the above-described first through fourth embodiments, the upper-side lateral wall portions **31, 331, 431** and the lower-side lateral wall portions **32, 332, 432,** and the outward-side vertical wall portion **33** and the inward-side vertical wall portion **34** are integrated. However, these may be separated. In this case, the outward-side vertical wall portion **33** and the inward-side vertical wall portion **34** may be joined to the upper-side lateral wall portions **31, 331, 431** and the lower-side lateral wall portions **32, 332, 432** by welding or adhesive agent.

The above-described embodiments merely exemplify the lower structure of the vehicle according to the present invention, and therefore the present invention is not limited by these embodiments. Any modifications which are specified in the claims and also construed under the doctrine of equivalents should be within the scope of the present invention.

The present invention described above is useful as the lower structure of the vehicle.

## Claims

1. A lower structure of a vehicle (1), comprising:
a pair of right-and-left side sills (2) extending in a vehicle longitudinal direction and having a closed-cross section;
a cross member (60) extending in a vehicle width direction between the pair of side sills (2); and
a reinforcement (30, 230, 330, 430) extending in the vehicle longitudinal direction inside the closed-cross section of each of the pair of side sills (2) and reinforcing the side sill (2),
wherein said reinforcement (30, 230, 330, 430) includes a pair of upper-and-lower lateral wall portions (31, 32) expanding in the vehicle longitudinal direction and in a vehicle width direction and a pair of right-and-left vertical wall portions (33, 34) connecting, in a vertical direction, respective right-side end portions, in the vehicle width direction, of said pair of lateral wall portions (31, 32) and respective left-side end portions, in the vehicle width direction, of said pair of lateral wall portions (31, 32), and at least one of said pair of lateral wall portions (31, 32) has plural first ridgeline portions (40, 44) which extend in the vehicle width direction and are aligned in the vehicle longitudinal direction, respectively.

2. The lower structure of the vehicle (1) of claim 1, wherein said lateral wall portion (31, 32) comprises a first flat-face portion (31a, 32a) located at a relatively upper side, a second flat-face portion (31b 32b) located at a relatively lower side, and a connection portion (31c, 32c) connecting said first flat-face portion (31a, 32a) and said second flat-face portion (31b, 32b) in the vertical direction, and said first ridgeline portions (40, 44) are positioned between said first flat-face portion (31a, 32a) and said connection portion (31c, 32c) and between said second flat-face portion (31b, 32b) and said connection portion, respectively, in particular said lateral wall portion (31, 32) has a concave-and-convex shape when viewed in the lateral direction of the vehicle.

3. The lower structure of the vehicle (1) of any of the preceding claims, wherein said cross member (60) is comprised of plural cross members (60) which are provided to be separated from each other in the vehicle longitudinal direction, and said reinforcement (30, 230, 330, 430) is arranged at a portion inside the side sill (2) which includes an area where said plural cross members (60) are provided.

4. The lower structure of the vehicle (1) of any of the preceding claims, wherein both of said pair of lateral wall portions (31, 32) have said plural first ridgeline portions (40, 44), respectively.

5. The lower structure of the vehicle (1) of any of the preceding claims, wherein said plural first ridgeline portions (40, 44) provided at said pair of lateral wall portions (31, 32) are located the same positions in the vehicle longitudinal direction.

6. The lower structure of the vehicle (1) of any of the preceding claims, wherein said cross member (60) includes a ridgeline portion (61d) extending in the vehicle width direction, said reinforcement (30, 230, 330, 430) is provided at the same position, in the vehicle longitudinal direction, as the cross member (60), and part of said plural first ridgeline portions (40) of the lateral wall portion (31) is located at the same level, in the vertical direction, as said ridgeline (61d) of the cross member (60) and/or at the same longitudinal position of the vehicle (1) as said ridgeline (61d) of the cross member (60).

7. The lower structure of the vehicle (1) of claim 1, wherein said cross member (60) has a cross-member body (61), in particular the cross-member body (61) has a cross section with a M-letter shape, the cross-member body (61) comprising a plurality of upper face portions (61a) and side face portions (61b), and a joint face portion (61c) to be joined to a floor panel (3) of the vehicle (1), the cross-member ridgeline portion (61d) extending in the lateral direction being formed between an upper face portion (61a) and a side face portion 61b and between the joint face portion (61c) and a side face portion (61b).

8. The lower structure of the vehicle (1) of any of the preceding claims, wherein said pair of lateral wall portions (31, 32) and said pair of vertical wall portions (33, 34) are integrated.

9. The lower structure of the vehicle (1) of any of the preceding claims, wherein said lateral wall portion (31, 32) has a flange (250) extending in the vertical direction, and said flange (250) is fixed to said side sill (2).

10. The lower structure of the vehicle of any of the preceding claims, wherein said lateral wall portion (31, 32) has a second ridgeline portion (343, 347) which extends in the vehicle longitudinal direction at a middle position, in the vehicle width direction, thereof.

11. The lower structure of the vehicle of any of the preceding claims, wherein the ridgeline portions (40, 44) are formed by a bending process applied to the lateral wall portions (31, 32).

12. The lower structure of the vehicle of any of the preceding claims, wherein the material strength of the reinforcement (30, 230, 330, 430) is lower than that of the cross-member (60).

13. The lower structure of the vehicle of any of the preceding claims, wherein part of the ridgeline portions (44) of the side lateral wall portion (32), is located at the same level, in the vertical direction, as a floor panel (3) of the vehicle (1).

14. The lower structure of the vehicle of any of the preceding claims, wherein the cross member (60) includes a cross-member body (61) and brackets (62), the brackets (62) are fixed to both sides, in the lateral direction, of the cross-member body (61), a left-side bracket (62), in the longitudinal direction of the vehicle (1), is fixed to the left-side side sill (2) by welding, and a right-side bracket (62), in the longitudinal direction of the vehicle (1), is fixed to the right-side side sill (2) by welding

15. A vehicle including a lower structure according to any of the preceding claims.
